# EUROPEAN PATENT APPLICATION

(11) **EP 4 825 569 A1**
(43) Date of publication of application: **21.10.2026**
(21) Application number: 26161011.7
(22) Date of filing: 26.02.2026
(51) Int. Cl.: B29D 30/06, B29D 30/00

(54) **GREEN TIRE INNER SURFACE COATING APPARATUS**

(30) Priority: 13.03.2025 JP 2025040442
(71) Applicant: Toyo Tire Corporation, Itami-shi, Hyogo 664-0847 (JP)
(72) Inventor: KOJIMA, Kunihiro, Itami-shi, Hyogo, 664-0847 (JP)
(74) Representative: Müller-Boré & Partner Patentanwälte PartG mbB

(57) **Abstract**

To provide an inner surface coating apparatus capable of uniformly applying a mold release agent to an inner surface of a green tire with a simple configuration. The apparatus includes: a placement table 40; a spray gun 60; and a rotation mechanism 70 that rotates the green tire 1. An injection axis 62 of the spray gun 60 is oriented toward the inner surface 1a so as to be substantially orthogonal to a central portion of the inner surface 1a in a tire axial direction. A first spray pattern 110 has a longitudinal direction L, and includes a central portion 110a and end portions 110b. A width of each end portion 110b is smaller than a width of the central portion 110a. The first spray pattern 110 has the longitudinal direction L inclined with respect to the tire axial direction.

## Description

This application is based on and claims the benefit of priority from Japanese Patent Application No. 2025-040442, filed on 13 March 2025, the content of which is incorporated herein by reference.

### BACKGROUND OF THE INVENTION

### Field of the Invention

The present invention relates to a green tire inner surface coating apparatus.

### Related Art

Conventionally, manufacturing a pneumatic tire involves a process, in which an unvulcanized green tire is set in a mold and vulcanized. In this vulcanization process, a bladder brought into contact with an inner surface of the green tire set in the mold is expanded toward a mold side, thereby pressing the green tire against an inner surface of the mold to perform molding. After vulcanization, the bladder is peeled off, and in general, a peeling agent is applied in advance to the inner surface of the green tire in order to facilitate peeling. In some cases, the peeling agent is applied by spraying the peeling agent onto the inner surface of the green tire from a spray gun disposed inside the green tire. For example, Patent Document 1 discloses a coating apparatus, in which a spray gun disposed inside a green tire is configured to be movable in a tire radial direction in accordance with a tire diameter, and the mold release agent can be applied in a uniform state even to tires having different tire diameters.

Patent Document 1: Japanese Unexamined Patent Application, Publication No. 2014-161832

### SUMMARY OF THE INVENTION

As described above, it is desirable that the mold release agent be applied in a uniform state to the inner surface of the green tire. However, due to a difference in distance from the spray gun to the inner surface of the green tire, such as a longer distance to a tread portion and a shorter distance to a bead portion, density variations occur in the mold release agent, making uniform application difficult. Here, as in the apparatus disclosed in Patent Document 1, uniform application can be achieved by moving the spray gun forward and backward with respect to the inner surface of the tire, or by providing a plurality of spray guns and making distances between each spray gun and the inner surface of the tire equal. However, such configurations cause a problem of increased complexity of the apparatus.

Accordingly, an object of the present invention is to provide a green tire inner surface coating apparatus that has a simple configuration and is capable of applying a mold release agent uniformly to an inner surface of a green tire.

A green tire inner surface coating apparatus according to the present invention includes: a support mechanism configured to support a green tire; a spray gun configured to spray and apply a mold release agent to an inner surface of the green tire; and a rotation mechanism configured to rotate the green tire relative to the spray gun about a rotation axis of the green tire, in which an injection axis of the spray gun is oriented toward the inner surface of the green tire so as to be substantially orthogonal to a central portion of the inner surface in a tire axial direction, a spray pattern of the spray gun has a longitudinal direction that is longer in the tire axial direction than in a tire circumferential direction, and includes a central portion at a center of the longitudinal direction and end portions at both ends of the longitudinal direction, a width of each of the end portions is smaller than a width of the central portion, and the spray pattern has the longitudinal direction inclined with respect to the tire axial direction.

A green tire inner surface coating apparatus according to the present invention includes: a support mechanism configured to support a green tire; a spray gun configured to spray and apply a mold release agent to an inner surface of the green tire; and a rotation mechanism configured to rotate the green tire relative to the spray gun about a rotation axis of the green tire, in which an injection axis of the spray gun is oriented toward the inner surface of the green tire so as to be substantially orthogonal to a central portion of the inner surface in a tire axial direction, a spray pattern of the spray gun has a rectangular shape having a longitudinal direction that is longer in the tire axial direction than in a tire circumferential direction, an amount of the mold release agent sprayed at end portions at both ends in the longitudinal direction is smaller than an amount of the mold release agent sprayed at a central portion at a center of the longitudinal direction, and the spray pattern has the longitudinal direction inclined with respect to the tire axial direction.

According to the present invention, it is possible to provide a green tire inner surface coating apparatus that has a simple configuration and is capable of applying a mold release agent uniformly to an inner surface of a green tire.

### BRIEF DESCRIPTION OF THE DRAWINGS

FIG. 1 is a half cross-sectional view of a pneumatic tire in a tire axial direction, vulcanized and molded after a mold release agent is applied to an inner surface of a green tire by an inner surface coating apparatus according to an embodiment;
FIG. 2 is a view taken along the arrow II direction in FIG. 1;
FIG. 3 is a cross-sectional view illustrating a principal portion of the inner surface coating apparatus according to the embodiment;
FIG. 4 is a diagram illustrating a state where a mold release agent is sprayed from a spray gun included in the inner surface coating apparatus according to the embodiment onto the inner surface of the green tire;
FIG. 5 is a diagram schematically illustrating a first spray pattern according to a first embodiment;
FIG. 6 is a diagram schematically illustrating a spray pattern applied to the inner surface of the green tire by the first spray pattern;
FIG. 7 is a diagram schematically illustrating a second spray pattern according to a second embodiment;
FIG. 8 is a diagram schematically illustrating a third spray pattern according to a third embodiment; and
FIG. 9 is a diagram schematically illustrating a fourth spray pattern according to a fourth embodiment.

### DETAILED DESCRIPTION OF THE INVENTION

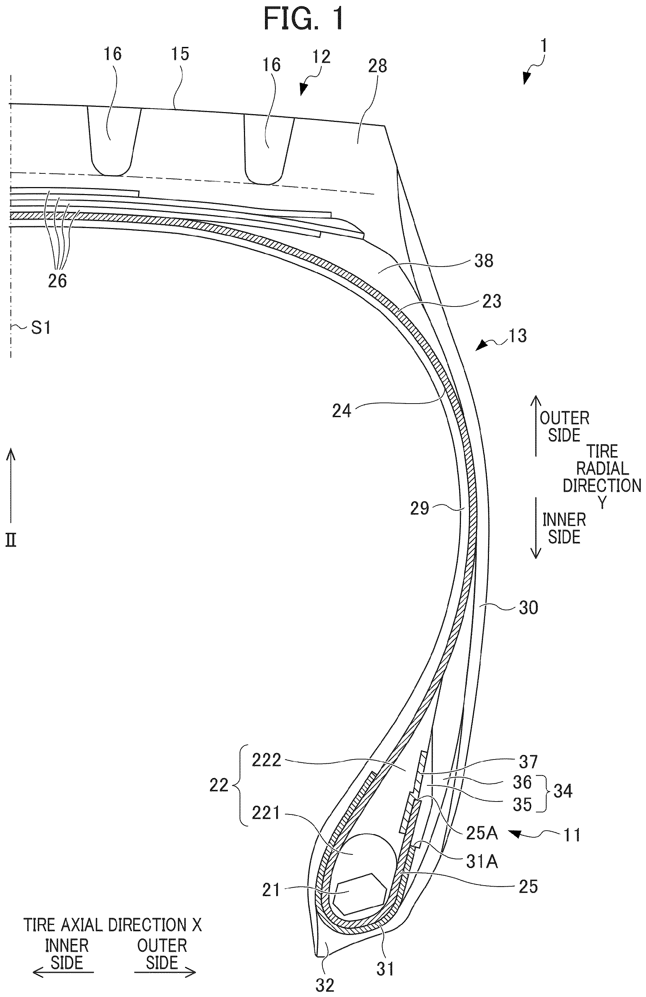

Hereinafter, embodiments will be described with reference to the drawings. FIG. 1 is a cross-sectional view of a pneumatic tire 1. The pneumatic tire 1 is obtained by vulcanizing and molding an unvulcanized green tire. The inner surface coating apparatus of the present disclosure is an apparatus configured to apply a mold release agent to an inner surface of the green tire.

First, an internal structure of the pneumatic tire (hereinafter, simply referred to as a tire) 1 will be described with reference to FIG. 1. An internal structure of the green tire before vulcanization and molding is the same as that of the tire 1 illustrated in FIG. 1, although there are portions having different shapes.

The cross-sectional view of FIG. 1 is a half cross-sectional view illustrating a right half portion of the tire 1 in a tire axial direction (tire meridian half cross-sectional view). The cross-sectional view of FIG. 1 is a half cross-sectional view of the tire 1 mounted on a rim (not illustrated) in the tire axial direction, filled with a normal internal pressure in an unloaded state.

In FIG. 1, reference numeral S1 denotes a tire equatorial plane. The tire equatorial plane S1 is a plane orthogonal to a tire rotation axis, the plane located at the center in the tire axial direction. A basic internal structure of the tire 1 is bilaterally symmetrical with the tire equatorial plane S1 as a plane of symmetry in a cross section in the tire axial direction.

In FIG. 1, a tire axial direction is indicated by the arrow X, and an inner side and an outer side in the tire axial direction are further indicated. The tire axial direction is a direction parallel to the tire rotation axis, and corresponds to a left-right direction on the drawing sheet in FIG. 1. The inner side in the tire axial direction is a direction approaching the tire equatorial plane S1, and corresponds to a left side on the drawing sheet in FIG. 1. The outer side in the tire axial direction is a direction away from the tire equatorial plane S1, and corresponds to a right side on the drawing sheet in FIG. 1. In FIG. 1, a tire radial direction is indicated by the arrow Y, and an inner side and an outer side in the tire radial direction are further indicated. The tire radial direction is a direction perpendicular to the tire rotation axis, and corresponds to an up-down direction on the drawing sheet in FIG. 1. The outer side in the tire radial direction is a direction away from the tire rotation axis, and corresponds to an upper side on the drawing sheet in FIG. 1. The inner side in the tire radial direction is a direction approaching the tire rotation axis, and corresponds to a lower side on the drawing sheet in FIG. 1.

The tire 1 according to the embodiment is, for example, a pneumatic tire for trucks. The configuration of the tire 1 according to the embodiment can be adopted not only for trucks but also for various vehicles such as light trucks, buses, and passenger vehicles.

The tire 1 includes: a pair of beads 11; a pair of sidewalls 13 extending from the respective beads 11 toward the outer side in the tire radial direction; a tread 12 disposed between outer end portions of the respective sidewalls 13 in the tire radial direction; a carcass ply 23 disposed between the pair of beads 11; and an inner liner 29 disposed on a tire cavity side of the carcass ply 23.

Each bead 11 includes: a bead core 21; a tapered bead filler 22 extending from the bead core 21 toward an outer side in the tire radial direction; a chafer 31; and a rim strip rubber 32.

The bead core 21 is a member that functions to fix the tire 1 filled with air to a rim of a wheel (not illustrated). The bead filler 22 is a member provided to increase rigidity of a peripheral portion of the bead 11 and to secure high steering performance and stability. In the embodiment, the bead filler 22 includes: a first bead filler 221 covering an outer periphery of the bead core 21; and a second bead filler 222 disposed on an outer side of the first bead filler 221 in the tire radial direction. The bead filler 22 may be formed of a single type of rubber.

The chafer 31 is disposed on an inner side of the carcass ply 23 provided around the bead core 21 in the tire radial direction. The rim strip rubber 32 is disposed so as to extend from an inner side of the chafer 31 and the carcass ply 23 in the tire radial direction to an outer side thereof in the tire axial direction.

The sidewall 13 includes a sidewall rubber 30 disposed on an outer side of the carcass ply 23 in the tire axial direction. The sidewall rubber 30 forms an outer surface of the tire 1. The sidewall rubber 30 is a portion that undergoes the greatest deflection when the tire 1 exhibits a cushioning action, and a flexible rubber having fatigue resistance is adopted in general. An inner end portion of the sidewall rubber 30 in the tire radial direction covers a part of the rim strip rubber 32.

The tread 12 includes: a plurality of belt layers 26 disposed on an outer side of the carcass ply 23 in the tire radial direction; and a tread rubber 28 disposed on an outer side of the plurality of belt layers 26 in the tire radial direction. The plurality of belt layers 26 are members that reinforce the tread 12. In the present embodiment, four belt layers 26 are provided, although the number of laminated belt layers 26 is not limited to this configuration. The tread rubber 28 has a tread surface 15 where the tire 1 comes into contact with a road surface. A plurality of main grooves 16 are formed in the tread surface 15. Each main groove 16 is a circumferential groove extending in a tire circumferential direction.

The carcass ply 23 is a member in which a plurality of ply cords are covered with rubber, and constitutes a skeleton of the tire 1. The carcass ply 23 is embedded in the tire 1 so as to extend between the pair of bead cores 21 while passing through the pair of sidewalls 13 and the tread 12. The carcass ply 23 includes: a ply main body portion 24 disposed between the pair of bead cores 21; and a pair of turn-up portions 25 that are turned up around the respective bead cores 21 from inner ends of the ply main body portion 24 in the tire radial direction and extend outward in the tire radial direction on outer sides of the respective bead fillers 22 in the tire axial direction.

In a vicinity of an outer side of the tread 12 in the tire axial direction, a shoulder pad 38 is disposed in a region surrounded by the carcass ply 23, the belt layers 26, the tread rubber 28, and the sidewall rubber 30. The shoulder pad 38 has a cushioning function.

In an interior of the tire extending from the sidewall 13 to the bead filler 22, a pad member 34 is disposed between the carcass ply 23 and both the sidewall rubber 30 and the rim strip rubber 32. The pad member 34 includes a first pad 35 and a second pad 36.

The first pad 35 is disposed on an outer side of the turn-up portion 25 of the carcass ply 23 and the bead filler 22 in the tire axial direction, and on an outer side of an outer end portion 31A of the chafer 31 in the tire radial direction. The first pad 35 is provided so as to cover at least an outer side of a turn-up end 25A of the turn-up portion 25 in the tire axial direction. An outer side of the first pad 35 in the tire radial direction has a tapered shape that becomes thinner toward an outer side in the tire radial direction.

The second pad 36 is provided so as to cover an outer side of the first pad 35 in the tire axial direction. More specifically, the second pad 36 is provided so as to cover outer sides, in the tire axial direction, of a part of the chafer 31, the first pad 35, a part of the second bead filler 222, and a part of the ply main body portion 24 of the carcass ply 23. A sidewall rubber 30 is disposed on an outer side, in the tire radial direction, of an outer region of the second pad 36 in the tire radial direction, and a rim strip rubber 32 is disposed on an outer side, in the tire axial direction, of an inner region of the second pad 36 in the tire radial direction.

A rubber sheet 37 is disposed on an inner side of the first pad 35 in the tire axial direction, in a vicinity of a turn-up end 25A of the turn-up portion 25 of the carcass ply 23. The rubber sheet 37 is disposed so as to cover at least the turn-up end 25A of the turn-up portion 25 from an inner side in the tire axial direction.

The inner liner 29 is provided on an inner surface of the tire between the pair of beads 11, and covers an inner surface of the ply main body portion 24 of the carcass ply 23, an inner surface of the chafer 31, and an inner surface of the rim strip rubber 32. The inner liner 29 is formed of air-impermeable rubber and prevents air in the tire cavity from leaking to the outside. The inner liner 29 is thin band-shaped rubber and is disposed on the inner surface of the tire in a state of being wound in a tire circumferential direction.

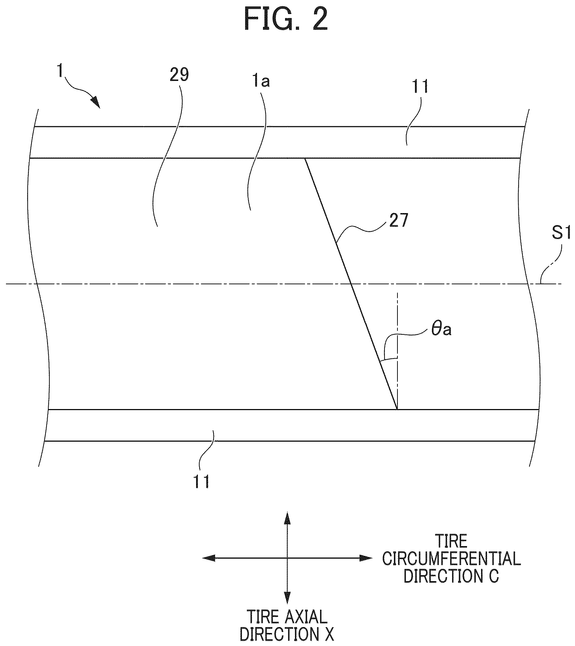

FIG. 2 is a view taken along the arrow II direction in FIG. 1, and illustrates a part of the tire in a tire circumferential direction when the tire 1 is viewed from an inner surface side. In FIG. 2, a tire axial direction X and a tire circumferential direction C are each indicated by arrows. FIG. 2 illustrates a tire equatorial plane S1.

As illustrated in FIG. 2, the inner liner 29 includes a substantially linear joint portion 27 at which one end in the tire circumferential direction and another end in the tire circumferential direction are joined. The joint portion 27 is a substantially linear portion in which one end of the inner liner 29 overlaps another end of the inner liner 29. In a precise sense, the joint portion 27 in FIG. 2 indicates the edge of one end of the inner liner 29 in a state where the one end overlaps the other end.

The joint portion 27 according to the embodiment is inclined with respect to the tire axial direction. An inclination angle θa of the joint portion 27 with respect to the tire axial direction is, for example, 5° or more and 45° or less, but is not limited thereto.

The tire 1 includes the above-described configuration. The tire 1 is obtained by vulcanizing and molding, in a mold, an unvulcanized green tire formed into a tire shape approximating the tire 1. During the vulcanizing and molding, the green tire is pressed against an inner surface of the mold by expanding a bladder brought into contact with an unvulcanized inner liner 29 that constitutes the inner surface of the tire. After vulcanization and molding, the bladder is peeled off, and in order to facilitate peeling of the bladder, a peeling agent is applied in advance to the inner surface of the green tire. Hereinafter, an inner surface coating apparatus according to an embodiment, which applies a mold release agent to the inner surface of the green tire, will be described. In the following description, the green tire 1 before vulcanizing and molding is also denoted by reference numeral 1, and the same reference numerals are assigned to the above-described constituent elements to continue the description.

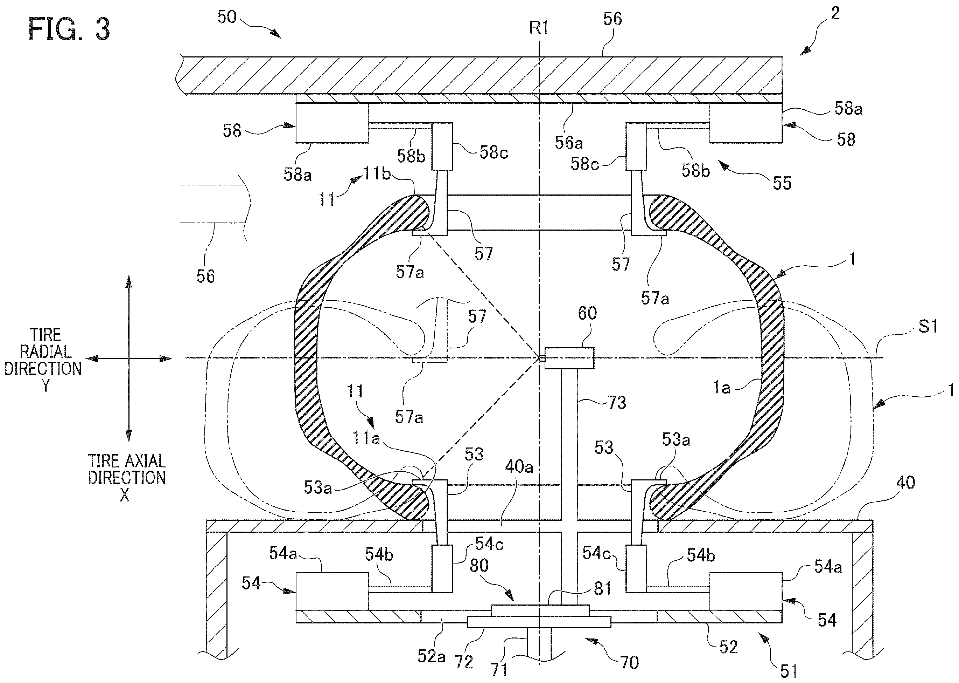

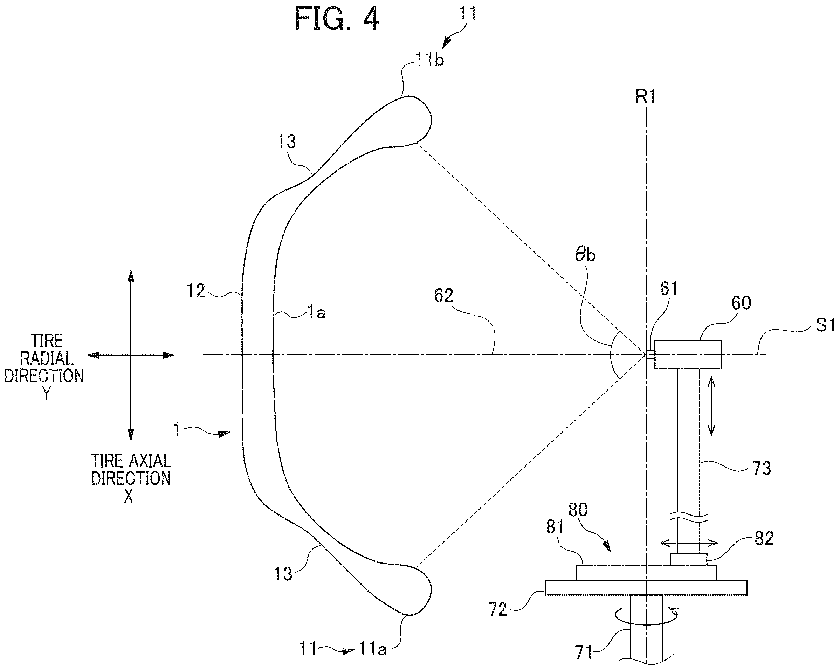

FIG. 3 illustrates a principal portion of an inner surface coating apparatus 2 according to the embodiment. FIG. 4 illustrates a state where a mold release agent is sprayed from a spray gun 60 included in the inner surface coating apparatus 2 onto the inner surface of the green tire 1. In FIGS. 3 and 4, the tire axial direction X and the tire radial direction Y of the green tire 1 set in the inner surface coating apparatus 2 are each indicated by arrows. Hereinafter, the inner surface coating apparatus 2 according to the embodiment will be described with reference to FIGS. 3 and 4. In the following description, a direction identical to the tire radial direction may be referred to as a left-right direction, and a direction identical to the tire axial direction may be referred to as an up-down direction.

As illustrated in FIG. 3, the inner surface coating apparatus 2 includes: a placement table 40 serving as a support mechanism on which the green tire 1 is placed; an expansion mechanism 50 that holds the beads 11 of the green tire 1 and expands an interval between the beads 11 to increase the dimension of the green tire 1 in the tire axial direction; a spray gun 60 that sprays a mold release agent onto the inner surface of the green tire 1; a rotation mechanism 70 that rotates the spray gun 60 about an up-down direction axis; and a radial movement mechanism 80 that moves a position of the spray gun 60 in the tire radial direction (left-right direction).

The green tire 1 is placed on the placement table 40 in a laid-down state, that is, in a state where the tire axial direction extends along the up-down direction and the tire radial direction extends substantially along the horizontal direction. The placement table 40 has an annular shape and includes, at a center thereof, a through hole 40a penetrating in the up-down direction. The green tire 1 is placed on the placement table 40 such that a center axis thereof, that is, a tire rotation axis R1, coincides with a center of the through hole 40a.

The beads 11 of the green tire 1 placed on the placement table 40 are divided into a lower bead 11a on one side in the tire axial direction, which is a lower side, and an upper bead 11b on another side in the tire axial direction, which is an upper side. The expansion mechanism 50 includes a lower holding mechanism 51 that holds the lower bead 11a, and an upper holding mechanism 55 that holds the upper bead 11b.

The lower holding mechanism 51 is disposed inside the placement table 40, and includes: an elevating table 52 provided so as to be movable in the up-down direction; a plurality of lower engagement plates 53 configured to be engageable with the lower bead 11a; and a lower movement mechanism 54 that moves each of the lower engagement plates 53 in the tire radial direction.

The elevating table 52 is supported by a base (not illustrated) so as to be movable in the up-down direction. The elevating table 52 includes a disc-shaped plate member. A through hole 52a penetrating in the up-down direction is provided at a center of the elevating table 52. A center of the through hole 52a coincides with a center of the through hole 40a of the placement table 40 and with the tire rotation axis R1 of the green tire 1. The elevating table 52 is raised and lowered by an elevating drive mechanism such as an air cylinder (not illustrated) and is adjustable in position in the up-down direction.

Each lower engagement plate 53 is a plate member that is curved in an arc shape along an inner diameter of the green tire 1 in a plan view and extends in the up-down direction. Each lower engagement plate 53 includes, at an upper end thereof, a claw 53a that is bent toward an outer side in the tire radial direction and is configured to be engageable with an inner side of the lower bead 11a. The plurality of lower engagement plates 53 are arranged at intervals around the tire rotation axis R1.

The lower movement mechanism 54 is provided on the elevating table 52 corresponding to each lower engagement plate 53. The lower movement mechanism 54 according to the embodiment is constituted by a generally known air cylinder. That is, the lower movement mechanism 54 includes a cylinder body 54a, and a piston rod 54b that is disposed on an inner side of the cylinder body 54a in the tire radial direction and extends and contracts along the tire radial direction. A distal end of the piston rod 54b is connected to the lower engagement plate 53 via a connecting member 54c. Each lower engagement plate 53 is movable along the tire radial direction integrally with an extending and contracting operation of the piston rod 54b.

With the lower holding mechanism 51, in a state where the piston rods 54b of the lower movement mechanisms 54 are extended and the respective lower engagement plates 53 are moved toward an inner side in the tire radial direction, the elevating table 52 is moved upward, and the claws 53a of the respective lower engagement plates 53 pass through the through hole 40a of the placement table 40 and are inserted into the green tire 1. From this state, the piston rods 54b are contracted and the elevating table 52 is moved downward. As a result, the lower bead 11a is pressed against an upper surface of the elevating table 52 by the claws 53a of the respective lower engagement plates 53 and is held on the elevating table 52.

The upper holding mechanism 55 is provided so as to be movable in the up-down direction, and includes: a substantially horizontal elevating arm 56 that has a base plate portion 56a fixed to a lower surface thereof; a plurality of upper engagement plates 57 configured to be engageable with the upper bead 11b; and an upper movement mechanism 58 that moves each of the upper engagement plates 57 in the tire radial direction.

The elevating arm 56 is supported by the above-described base so as to be movable in the up-down direction. The base plate portion 56a is a disc-shaped plate member. A center of the base plate portion 56a coincides with the tire rotation axis R1 of the green tire 1 placed on the placement table 40.

The upper engagement plates 57 are a plurality of plate members that are curved in an arc shape along an inner diameter of the green tire 1 in a plan view and extend in the up-down direction. Each upper engagement plate 57 includes, at a lower end thereof, a claw 57a that is bent toward an outer side in the tire radial direction and is configured to be engageable with the upper bead 11b. The plurality of upper engagement plates 57 are arranged at intervals around the tire rotation axis R1.

The upper movement mechanism 58 is provided on a lower surface of the base plate portion 56a corresponding to each upper engagement plate 57. The upper movement mechanism 58 according to the embodiment is constituted by a generally known air cylinder. That is, the upper movement mechanism 58 includes a cylinder body 58a, and a piston rod 58b that is disposed on an inner side of the cylinder body 58a in the tire radial direction and extends and contracts along the tire radial direction. A distal end of the piston rod 58b is connected to the upper engagement plate 57 via a connecting member 58c. Each upper engagement plate 57 is movable along the tire radial direction integrally with an extending and contracting operation of the piston rod 58b.

With the upper holding mechanism 55, in a state where the piston rods 58b of the upper movement mechanisms 58 are extended and the respective upper engagement plates 57 are moved toward an inner side in the tire radial direction, the elevating arm 56 is moved downward, and the claws 57a of the respective upper engagement plates 57 are inserted into the green tire 1. From this state, the piston rods 58b are contracted and the elevating arm 56 is moved upward. As a result, the claws 57a of the respective upper engagement plates 57 engage with an inner side of the upper bead 11b.

As described above, from a state where the lower bead 11a is held on the elevating table 52 by the lower holding mechanism 51 and the claws 57a of the respective upper engagement plates 57 are engaged with the upper bead 11b, when the elevating arm 56 is moved upward, the upper bead 11b is moved upward. As a result, the green tire 1 is expanded such that an interval between the upper and lower beads 11 is increased, as illustrated in FIG. 2. While maintaining the state where the interval between the upper and lower beads 11 is increased, a mold release agent is applied to the inner surface of the green tire 1 from the spray gun 60.

The spray gun 60 is disposed inside the green tire 1. The spray gun 60 is attached to an upper portion of a rod 73 extending in the up-down direction so as to be movable in the up-down direction. As illustrated in FIG. 4, the spray gun 60 includes a nozzle 61 that sprays the mold release agent described above in the horizontal direction. An injection axis of the nozzle 61, that is, an injection axis 62 of the spray gun 60, is oriented in a direction substantially orthogonal to a tire rotation axis R1, toward an inner surface of the green tire 1 at a center in the tire axial direction, the inner surface being an inner surface of the tread 12. A spray angle θb of the mold release agent sprayed from the spray gun 60 is set, for example, in accordance with an inner surface of a green tire having a largest diameter to which the mold release agent is applied.

A supply pipe (not illustrated) configured to supply a mold release agent and compressed air is connected to the spray gun 60, and the mold release agent and the compressed air are supplied from a mold release agent supply device (not illustrated). Accordingly, a mist-like mold release agent is sprayed from the nozzle of the spray gun 60. As the mold release agent, a known mold release agent including an inorganic component composed of powder, a silicone component, a surfactant, and water is used.

The rotation mechanism 70 includes: a rotation drive shaft 71 disposed inside the placement table 40 and extending in the up-down direction; a rotation plate 72 fixed to an upper end of the rotation drive shaft 71; and the rod 73 disposed above the rotation plate 72 via a radial movement mechanism 80 described later.

The rotation drive shaft 71 rotates about an axis by a drive source such as a motor (not illustrated). A rotation axis center of the rotation drive shaft 71 is coaxial with the tire rotation axis R1 of the green tire 1. In other words, the green tire 1 is placed on the placement table 40 so as to be coaxial with the rotation drive shaft 71. The rotation plate 72 is fixed to the upper end of the rotation drive shaft 71. The rod 73 is provided on the rotation plate 72 via the radial movement mechanism 80 described later. The rotation drive shaft 71, the rotation plate 72, the radial movement mechanism 80, and the rod 73 are disposed inside the through hole 52a of the elevating table 52 so as not to interfere with elevation of the elevating table 52.

With the rotation mechanism 70, when the rotation drive shaft 71 rotates, the rotation plate 72 and the rod 73 rotate, thereby causing the spray gun 60 to rotate about the tire rotation axis R1 of the green tire 1. That is, the spray gun 60 rotates around the tire rotation axis R1 of the green tire 1.

As illustrated in FIG. 4, the radial movement mechanism 80 includes a rail 81 provided on the rotation plate 72, and a slider 82 that slides on the rail 81 along the rail 81. The rail 81 passes through a rotation center of the rotation plate 72 and extends in the tire radial direction. The rod 73 to which the spray gun 60 is attached has a lower end fixed to an upper surface of the slider 82. The slider 82 is driven to slide along the rail 81 in the tire radial direction by a slide drive source such as a motor (not illustrated). With the radial movement mechanism 80, by sliding the slider 82 on the rail 81, a position of the spray gun 60 in the tire radial direction is adjustable in accordance with a tire size.

The spray gun 60 attached to the rod 73 is movable in the up-down direction along the rod 73 and is stoppable at an arbitrary position on the rod 73. Accordingly, a position of the spray gun 60 in the tire axial direction is adjustable in accordance with a tire size.

With the inner surface coating apparatus 2 of the embodiment, a mold release agent is applied to an inner surface 1a of the green tire 1, as described below.

The green tire 1 is placed on the placement table 40, and an interval between upper and lower beads 11 of the green tire 1 is expanded by the expansion mechanism 50. A position of the nozzle 61 of the spray gun 60 in the tire axial direction is set so as to coincide with the tire equatorial plane S1 of the green tire 1, and a position of the nozzle 61 of the spray gun 60 in the tire radial direction is set by the radial movement mechanism 80 so as to be at an appropriate distance from the inner surface 1a of the green tire 1. While this state is maintained, a mold release agent is sprayed from the nozzle 61 of the spray gun 60 onto the inner surface 1a of the green tire 1 while the spray gun 60 rotates by the rotation mechanism 70. When the spray gun 60 completes one rotation, the mold release agent is applied to the inner surface 1a of the green tire 1. The appropriate distance between the nozzle 61 of the spray gun 60 and the inner surface of the green tire 1 is a distance at which the mold release agent sprayed from the nozzle 61 is sprayed over an entire area of the inner surface 1a of the green tire 1 in the tire axial direction and is not sprayed onto the beads 11. An interval between the beads 11 is expanded such that, when the inner surface 1a of the green tire 1 is viewed from a viewpoint of the nozzle 61 of the spray gun 60, an entire area of the inner surface 1a is visible without being hidden by the beads 11.

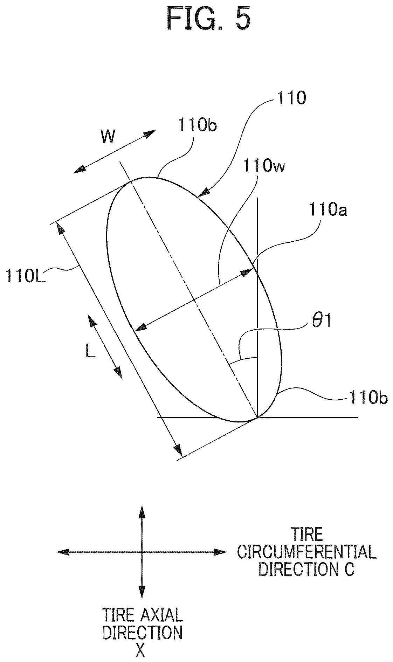

The spray gun 60 according to the embodiment is characterized in the spray pattern of the mold release agent sprayed from the nozzle 61. As used herein, a spray pattern refers to a shape of a spray trace drawn on a spray target surface when the nozzle 61 is disposed at a position separated by 30 cm from the spray target surface, which is a flat surface, and the mold release agent is sprayed from the nozzle 61 onto the spray target surface in a state where an injection axis 62 is substantially orthogonal to the spray target surface. Hereinafter, spray patterns according to the embodiment applied to the inner surface coating apparatus 2 will be described with reference to FIGS. 5 to 9. In FIGS. 5 to 9, the tire axial direction X and the tire circumferential direction C are indicated by arrows to illustrate shapes of the spray patterns with respect to the inner surface 1a of the green tire 1.

FIG. 5 is a diagram schematically illustrating a first spray pattern 110 serving as a spray pattern according to a first embodiment. The first spray pattern 110 has an elliptical shape. The first spray pattern 110 has a longitudinal direction L that is longer in the tire axial direction than in the tire circumferential direction. The first spray pattern 110 includes a central portion 110a at a center of the longitudinal direction L and end portions 110b at both ends of the longitudinal direction L, and a width of each end portion 110b is smaller than a width of the central portion 110a. Accordingly, an amount of the mold release agent sprayed by the spray gun 60 is greater at the central portion 110a in the longitudinal direction L and smaller at each end portion 110b in the longitudinal direction L than at the central portion 110a.

The first spray pattern 110 has the longitudinal direction L inclined with respect to the tire axial direction. An inclination angle θ1 of the longitudinal direction L with respect to the tire axial direction is preferably 5° or more and 45° or less. Further, the longitudinal direction L preferably extends in substantially the same direction as, and is inclined at substantially the same angle as, a joint portion 27 of the inner liner 29.

Further, in the first spray pattern 110, when a length in the longitudinal direction L is denoted by 110L and a length in a width direction W orthogonal to the longitudinal direction L, which is a maximum width, is denoted by 110W, the 110W is preferably 45% or more and 70% or less of the 110L, and more preferably 50% or more and 65% or less of the 110L.

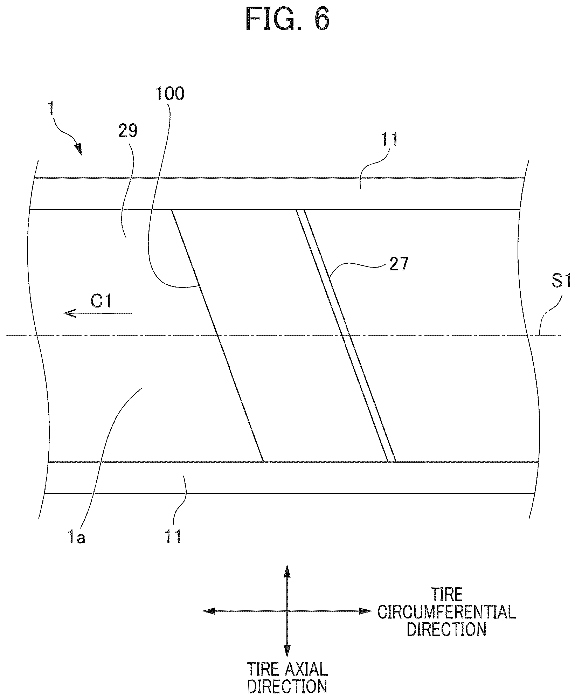

FIG. 6 is a diagram schematically illustrating an inner surface spray pattern 100 that actually adheres to the inner surface 1a when a mold release agent is sprayed onto the inner surface 1a of the green tire 1 from the nozzle 61 of the spray gun 60 having the first spray pattern 110. A distance between the inner surface 1a of the green tire 1, extending from the tread 12 through the sidewalls 13 on both sides in the tire axial direction to the beads 11 on both sides in the tire axial direction, and the nozzle 61 of the spray gun 60 is longest at the inner surface 1a of the tread 12 and becomes shorter toward the beads 11. Accordingly, when an amount of the mold release agent sprayed from the spray gun 60 is substantially the same in the tire axial direction, the spray diffuses, so that an adhesion density of the mold release agent on the inner surface 1a of the tread 12, which is farthest, is lowest, and the adhesion density increases toward the beads 11. That is, density variations occur in an application state of the mold release agent, such that the mold release agent on the inner surface 1a of the tread 12 is relatively thick and the mold release agent adhering to the inner surface 1a becomes thinner toward the beads 11. However, with an elliptical shape elongated in the tire axial direction as in the first spray pattern 110 according to the first embodiment, the mold release agent that actually adheres to the inner surface 1a of the green tire 1 is less likely to cause density variations in the tire axial direction, and therefore is readily applied in a state having a uniform density.

A position of the inner surface spray pattern 100 illustrated in FIG. 6 is a spray start position of the mold release agent. From the spray start position, the mold release agent is sprayed in a direction indicated by the arrow C1 by rotation of the spray gun 60. The spray start position is set at a position slightly separated from a joint portion 27 of an inner liner 29 toward one side in a tire circumferential direction. In the first spray pattern 110, the longitudinal direction L is preferably inclined in substantially the same direction and at substantially the same angle as the joint portion 27. By one rotation of the spray gun 60, the mold release agent is sprayed onto and applied to the inner surface 1a of the green tire 1. In order to avoid separation of the inner liner 29 from the joint portion 27 and occurrence of a joint defect, it is preferable that the mold release agent not be sprayed onto the joint portion 27. Accordingly, in a precise sense, the spray gun 60 does not complete one full rotation, and rotation and spraying are stopped immediately before completion of one rotation, and a stop position, that is, a spray end position of the mold release agent, is set at a position opposite to the spray start position across the joint portion 27 and close to the joint portion 27. The spray start position and the spray end position of the spray gun 60 with respect to the joint portion 27 are preferably closer to the joint portion 27. However, in consideration of preventing the mold release agent from being applied to the joint portion 27, it is preferable that, in both positions, a center of the first spray pattern 110 is separated from the joint portion 27 in the tire circumferential direction by, for example, 10 mm or more and 60 mm or less. A position or the like of the joint portion 27 may be detected by, for example, a camera provided so as to be capable of imaging the inner surface 1a, and rotation of the spray gun 60 may be controlled in accordance with a detection result.

With the inner surface coating apparatus 2 according to the embodiment, even without adopting a complicated configuration such as disposing a plurality of spray guns so that distances to the inner surface 1a of the green tire 1 are equal, by forming a shape of the spray pattern into a long elliptical shape in which the longitudinal direction L is long toward the tire axial direction side, as in the first spray pattern 110, the mold release agent is readily applied in a state having a uniform density in the tire axial direction. That is, with a simple configuration such as adjusting a configuration of the nozzle 61 of a single spray gun 60, it becomes possible to apply the mold release agent uniformly to the inner surface 1a of the green tire 1. When the mold release agent is applied uniformly in this manner, dripping and coating unevenness, which would otherwise occur due to partial excessive application of the mold release agent, are less likely to occur. For example, when dripping occurs, the mold release agent flows from the inner surface 1a toward a surface side of the green tire 1, and even after vulcanization, traces of the mold release agent remain on the tire surface, resulting in deterioration of appearance. However, by using the first spray pattern 110, such problems can be avoided.

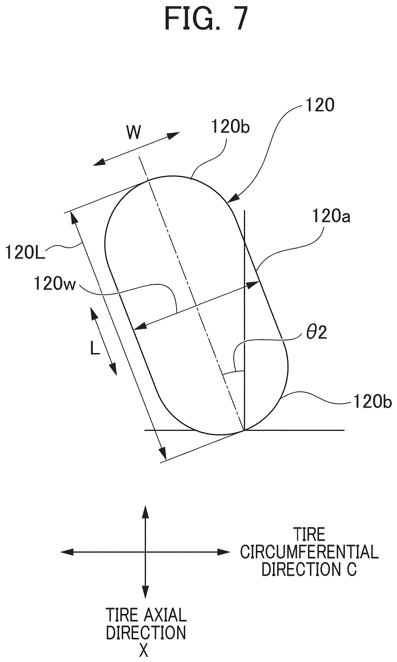

FIG. 7 is a diagram schematically illustrating a second spray pattern 120 serving as a spray pattern according to a second embodiment. In the second spray pattern 120, a central portion 120a at a center in the longitudinal direction L has a rectangular shape, and end portions 120b at both ends in the longitudinal direction L have a semi-arc-like oblong shape. A width of each end portion 120b is smaller than a width of the central portion 120a. With the second spray pattern 120 having such width differences, an amount of the mold release agent sprayed by the spray gun 60 is greater at the central portion 120a in the longitudinal direction L and smaller at each end portion 120b in the longitudinal direction L than at the central portion 120a.

The second spray pattern 120 has the longitudinal direction L inclined with respect to the tire axial direction. An inclination angle θ2 of the longitudinal direction L with respect to the tire axial direction is preferably 5° or more and 45° or less. Further, the longitudinal direction L preferably extends in substantially the same direction as, and is inclined at substantially the same angle as, the joint portion 27 of the inner liner 29.

Further, in the second spray pattern 120, when a length in the longitudinal direction L is denoted by 120L and a length in a width direction W orthogonal to the longitudinal direction L, which is a maximum width, is denoted by 120W, the 120W is preferably 45% or more and 70% or less of the 120L, and more preferably 50% or more and 65% or less of the 120L.

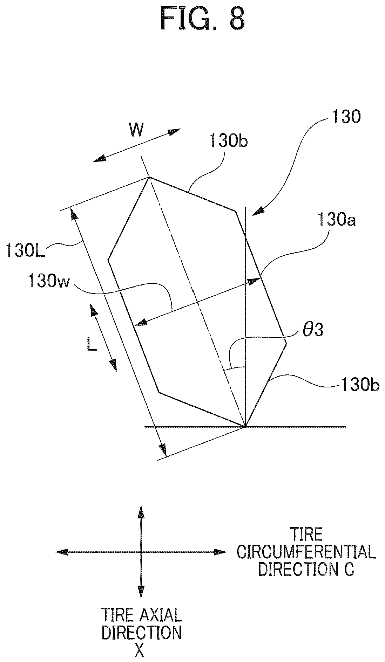

FIG. 8 is a diagram schematically illustrating a third spray pattern 130 serving as a spray pattern according to a third embodiment. In the third spray pattern 130, a central portion 130a at a center in the longitudinal direction L has a rectangular shape, and end portions 130b at both ends in the longitudinal direction L have a triangular shape, and a width of each end portion 130b is smaller than a width of the central portion 130a. With the third spray pattern 130 having such width differences, an amount of the mold release agent sprayed by the spray gun 60 is greater at the central portion 130a in the longitudinal direction L and smaller at each end portion 130b in the longitudinal direction L than at the central portion 130a.

The third spray pattern 130 has the longitudinal direction L inclined with respect to the tire axial direction. An inclination angle θ3 of the longitudinal direction L with respect to the tire axial direction is preferably 5° or more and 45° or less. Further, the longitudinal direction L preferably extends in substantially the same direction as, and is inclined at substantially the same angle as, the joint portion 27 of the inner liner 29.

Further, in the third spray pattern 130, when a length in the longitudinal direction L is denoted by 130L and a length in a width direction W orthogonal to the longitudinal direction L, which is a maximum width, is denoted by 130W, the 130W is preferably 45% or more and 70% or less of the 130L, and more preferably 50% or more and 65% or less.

With the second spray pattern 120 and the third spray pattern 130 described above, due to shapes in which widths of both end portions in the longitudinal direction L are smaller than a width of a central portion in the longitudinal direction L, similarly to the first spray pattern 110, the mold release agent that actually adheres to the inner surface 1a of the green tire 1 is less likely to cause density variations in the tire axial direction and is readily applied in a uniform state, as in the inner surface spray pattern 100 illustrated in FIG. 6.

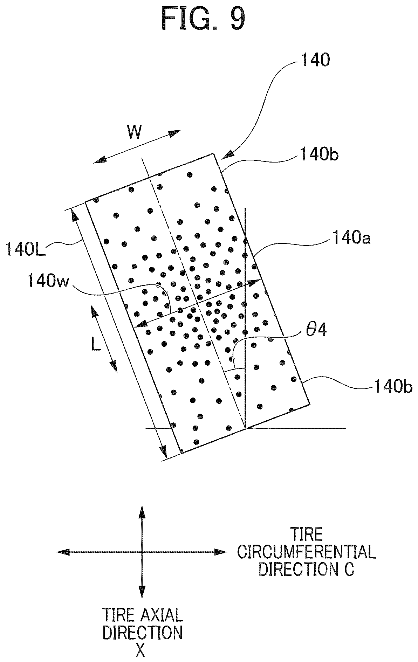

FIG. 9 is a diagram schematically illustrating a fourth spray pattern 140 serving as a spray pattern according to a fourth embodiment. The fourth spray pattern 140 has a rectangular shape having the longitudinal direction L that is longer in the tire axial direction than in the tire circumferential direction. In the fourth spray pattern 140, an amount of the mold release agent sprayed at end portions 140b at both ends in the longitudinal direction L is smaller than an amount of the mold release agent sprayed at a central portion 140a at a center in the longitudinal direction L.

The fourth spray pattern 140 has the longitudinal direction L inclined with respect to the tire axial direction. An inclination angle θ4 of the longitudinal direction L with respect to the tire axial direction is preferably 5° or more and 45° or less. Further, the longitudinal direction L preferably extends in substantially the same direction as, and is inclined at substantially the same angle as, the joint portion 27 of the inner liner 29.

Further, in the fourth spray pattern 140, when a length in the longitudinal direction L is denoted by 140L and a length in a width direction W orthogonal to the longitudinal direction L, which is a width, is denoted by 140W, the 140W is preferably 45% or more and 70% or less of the 140L, and more preferably 50% or more and 65% or less of the 140L.

With the fourth spray pattern 140 described above, due to a difference in an amount of the mold release agent sprayed in the longitudinal direction L, that is, due to an amount of the mold release agent sprayed at the end portions 140b at both ends in the longitudinal direction L being smaller than an amount of the mold release agent sprayed at the central portion 140a at the center in the longitudinal direction L, similarly to the first spray pattern 110, the mold release agent that actually adheres to the inner surface 1a of the green tire 1 is less likely to cause density variations in the tire axial direction and is readily applied in a uniform state, as in the inner surface spray pattern 100 illustrated in FIG. 6.

According to the inner surface coating apparatus 2 for the green tire 1 of the embodiment described above, the following effects can be achieved.
(1) The green tire inner surface coating apparatus 2 according to the embodiment includes: the placement table 40 serving as a support mechanism that supports the green tire 1; the spray gun 60 that sprays and applies a mold release agent to the inner surface 1a of the green tire 1; and the rotation mechanism 70 that rotates the green tire 1 relative to the spray gun 60 about the rotation axis R1 of the green tire 1. The injection axis 62 of the spray gun 60 is oriented toward the inner surface 1a of the green tire 1 so as to be substantially orthogonal to the center of the inner surface 1a in the tire axial direction. The first spray pattern 110, the second spray pattern 120, and the third spray pattern 130 serving as spray patterns of the spray gun 60 each have a longitudinal direction L that is longer in the tire axial direction than in the tire circumferential direction, and include a central portion at the center of the longitudinal direction L and end portions at both ends of the longitudinal direction L, in which the widths of the end portions are smaller than the width of the central portion. Each of the spray patterns 110, 120, and 130 has the longitudinal direction L inclined with respect to the tire axial direction.

Accordingly, with a simple configuration, it becomes possible to apply the mold release agent to the inner surface 1a of the green tire 1 in a state having a uniform density without causing dripping or coating unevenness.

(2) The green tire inner surface coating apparatus 2 according to the embodiment includes: the placement table 40 serving as a support mechanism that supports the green tire 1; the spray gun 60 that sprays and applies a mold release agent to the inner surface 1a of the green tire 1; and the rotation mechanism 70 that rotates the green tire 1 relative to the spray gun 60 about the rotation axis R1 of the green tire 1. The injection axis 62 of the spray gun 60 is oriented toward the inner surface 1a of the green tire 1 so as to be substantially orthogonal to central portion of the inner surface 1a in the tire axial direction. The fourth spray pattern 140 serving as a spray pattern of the spray gun 60 has a rectangular shape having a longitudinal direction L that is longer in the tire axial direction than in the tire circumferential direction, in which an amount of the mold release agent sprayed at end portions 140b at both ends in the longitudinal direction L is smaller than an amount of the mold release agent sprayed at the central portion 140a at the center in the longitudinal direction L. The fourth spray pattern 140 has the longitudinal direction L inclined with respect to the tire axial direction.

Accordingly, with a simple configuration, it becomes possible to apply the mold release agent to the inner surface 1a of the green tire 1 in a state having a uniform density without causing dripping or coating unevenness.

(3) In the inner surface coating apparatus 2 according to item (1) of the embodiment, the first spray pattern 110 serving as the spray pattern has an elliptical shape.

Accordingly, with a simple configuration, it becomes possible to apply the mold release agent to the inner surface 1a of the green tire 1 in a state having a uniform density without causing dripping or coating unevenness.

(4) In the inner surface coating apparatus 2 according to items (1) to (3) of the embodiment, the longitudinal direction L of the spray pattern is inclined with respect to the tire axial direction by 5° or more and 45° or less.

Accordingly, compared with a case in which the longitudinal direction L extends along the tire axial direction, a length of the longitudinal direction L of the spray pattern can be increased. As a result, a density distribution of the spray pattern is dispersed in the longitudinal direction L, and consequently, a density of the mold release agent sprayed onto the inner surface 1a of the green tire 1 is likely to become uniform.

(5) In the inner surface coating apparatus 2 according to items (1) to (4) of the embodiment, the inner liner 29 is disposed on the inner surface 1a of the green tire 1 in a state of being wound in the tire circumferential direction. The inner liner 29 includes a substantially linear joint portion 27 at which one end in the tire circumferential direction and another end in the tire circumferential direction are joined. The joint portion 27 is inclined with respect to the tire axial direction. The longitudinal direction L of the spray pattern extends in substantially the same direction as the joint portion 27 and is inclined at substantially the same angle as the joint portion 27.

Accordingly, it becomes possible to prevent the mold release agent from being applied to the joint portion 27, and as a result, it is possible to avoid separation of the inner liner 29 at the joint portion 27 and occurrence of a joint defect.

(6) In the inner surface coating apparatus 2 according to items (1) to (5) of the embodiment, a length of the spray pattern in the width direction W orthogonal to the longitudinal direction L is preferably 45% or more and 70% or less of the length thereof in the longitudinal direction L.

Accordingly, it becomes possible to apply the mold release agent in a state having a uniform density without causing dripping or coating unevenness.

The present invention is not limited to the above-described embodiment, and modifications and improvements made within a scope in which an object of the present invention can be achieved are included in the scope of the present invention.

For example, in the above-described embodiment, the spray gun 60 is rotated around an axis of the tire rotation axis R1 of the green tire 1. However, the green tire 1 may be rotated relative to the spray gun 60 around the tire rotation axis R1 of the green tire 1. That is, a mold release agent may be sprayed while the green tire 1 is rotated around the tire rotation axis R1 with the spray gun 60 fixed. Both the spray gun 60 and the green tire 1 may be rotated.

## Claims

1. A green tire inner surface coating apparatus (2), comprising:
a support mechanism (40) configured to support the green tire (1);
a spray gun (60) configured to spray and apply a mold release agent to an inner surface (1a) of the green tire (1); and
a rotation mechanism (70) configured to rotate the green tire (1) relative to the spray gun (60) about a rotation axis (R1) of the green tire (1),
wherein an injection axis (62) of the spray gun (60) is oriented toward the inner surface (1a) of the green tire (1) so as to be substantially orthogonal to a central portion of the inner surface (1a) in a tire axial direction;
wherein a spray pattern (110, 120, 130, 140) of the spray gun (60) has a longitudinal direction that is longer in the tire axial direction than in a tire circumferential direction, and includes a central portion at a center of the longitudinal direction and end portions at both ends of the longitudinal direction,
a width of each of the end portions is smaller than a width of the central portion, and
the spray pattern (110, 120, 130, 140) has the longitudinal direction inclined with respect to the tire axial direction.

2. A green tire inner surface coating apparatus (2), comprising:
a support mechanism (40) configured to support a green tire (1);
a spray gun (60) configured to spray and apply a mold release agent to an inner surface (1a) of the green tire (1); and
a rotation mechanism (70) configured to rotate the green tire (1) relative to the spray gun (60) about a rotation axis (R1) of the green tire (1),
wherein an injection axis (62) of the spray gun (60) is oriented toward the inner surface (1a) of the green tire (1) so as to be substantially orthogonal to a central portion of the inner surface (1a) in a tire axial direction,
a spray pattern (110, 120, 130, 140) of the spray gun (60) has a rectangular shape having a longitudinal direction that is longer in the tire axial direction than in a tire circumferential direction,
an amount of the mold release agent sprayed at end portions at both ends in the longitudinal direction is smaller than an amount of the mold release agent sprayed at a central portion at a center of the longitudinal direction, and
the spray pattern (110, 120, 130, 140) has the longitudinal direction inclined with respect to the tire axial direction.

3. The green tire inner surface coating apparatus (2) according to claim 1, wherein the spray pattern (110, 120, 130, 140) has an elliptical shape.

4. The green tire inner surface coating apparatus (2) according to claim 1 or 2, wherein the longitudinal direction of the spray pattern (110, 120, 130, 140) is inclined with respect to the tire axial direction by 5° or more and 45° or less.

5. The green tire inner surface coating apparatus (2) according to claim 1 or 2,
wherein an inner liner (29) is disposed on the inner surface (1a) of the green tire (1) in a state of being wound in a tire circumferential direction, and the inner liner (29) includes a substantially linear joint portion (27) at which one end in the tire circumferential direction and another end in the tire circumferential direction are joined;
the joint portion (27) is inclined with respect to the tire axial direction, and
the longitudinal direction of the spray pattern (110, 120, 130, 140) extends in substantially the same direction as the joint portion (27) and is inclined at substantially the same angle as the joint portion (27).

6. The green tire inner surface coating apparatus (2) according to claim 1 or 2, wherein a length of the spray pattern (110, 120, 130, 140) in a width direction orthogonal to the longitudinal direction is 45% or more and 70% or less of a length thereof in the longitudinal direction.
